# EUROPEAN PATENT APPLICATION

(11) **EP 0 955 716 A2**
(43) Date of publication of application: **10.11.1999**
(21) Application number: 99108875.8
(22) Date of filing: 05.05.1999
(51) Int. Cl.: H02K 15/095

(54) **Method and programmable apparatus for effecting the reciprocation and oscillation in a stator winding machine**

(30) Priority: 05.05.1998 IT PI980036
(71) Applicant: CUGNIGNI, MASSIMO, 50028 Tavarnelle Val di Pesa (IT)
(72) Inventor: CUGNIGNI, MASSIMO, 50028 Tavarnelle Val di Pesa (IT)
(74) Representative: Celestino, Marco

(57) **Abstract**

A method for effecting a reciprocating motion and an oscillating motion in a stator winding machine, which comprises a hollow shaft (21) that has a wire winding end having at least a wire guiding needle (31A, 31B). The direct application (2, 15) to the shaft (21) of a reciprocating motion and contemporaneous direct application (7) to the shaft (21) of an oscillating motion are respectively provided according to predetermined stroke (z), amplitude (φ) and frequency. The reciprocation and oscillation follow a predetermined function F(z,φ,t). For determining the winding paths of said wire winding end in every geometry of stator (65) a step of self-programming (60) of a geometric function F(z,φ) is provided. A motor (7) for effecting the oscillation of the shaft (21) is also provided, which can be co-axial to the shaft same either in fixed part or in movable part with respect to the carriage (10) of a linear motor (2) for effecting the reciprocation.

## Description

### Field of the invention

The present invention relates to an electric motors stator winding machine.

More precisely, the invention relates to a method for operating a wire winding head of a stator winding machine, said head comprising a wire winding shaft having adjustable stroke and angle of oscillation.

Furthermore the invention relates to an apparatus actuating said wire winding head.

In particular, the invention relates to a programmable apparatus for effecting a reciprocating motion and an oscillating motion in this type of machine.

### Background of the invention

Many types of electric motors stators have coils of electrically insulated wire wound about protruding poles in recesses of a shaped body formed by a stack of metal sheets. A winding head comprising a winding hollow shaft through which the wire slides carries out the wire winding step, according to a well known technique. The wire enters the hollow shaft at one of its ends after having been unwound in a braked way from a reel and comes out at its other end through one or more wire guiding needles. The hollow shaft motion comprises reciprocation parallel to the axis of the stator and an oscillation about the axis of the shaft, so that the needles follow a substantially elliptical path and are capable of winding the wire about the poles of the stator.

Wire guiding shrouds of known type aid the wire laying step in the recesses of the stator. The path followed by the wire out of the needles, whose motion is substantially elliptical, is, then, tangential to the wire guiding shrouds, which lay the wire into the recesses provided about the poles.

In some cases, as described in EP0538905, instead of needle integral to the end of the hollow shaft, needles are provided for having an independent motion from each other and driven by means of rods coaxial to the hollow shaft. This way, the wire guiding shrouds can be omitted, even if a more complex driving mechanism is necessary.

The reciprocation of the winding shaft, as known, is given by means of different cinematic apparatus, synchronised to each other and, normally, operated by a single motor through mechanic drive and gears. In particular, for the reciprocation, a crank gear drive is known, for example described in US4158314 and US 5560554. Alternatively, a crank and slotted link is described in the above cited EP0538905, which transforms the rotation of a driving shaft into a reciprocation of the hollow shaft.

On the other hand, concerning the oscillation of the hollow shaft, a rocking lever drive is commonly used, an end of which is driven by a cam gear operated by the driving shaft, whereas the other end has a ring gear portion which engages with a pinion coaxial to the hollow shaft.

One of the main problems of the known cinematic apparatus is the quick adjustment of the reciprocation stroke of the hollow shaft. In particular, the adjustment, which should be carried out without opening every time the machine, is necessary because stators must be wound with different stack height, which corresponds to the longitudinal diameter of the elliptical path of the needles.

Since, therefore, the stators, which in order to be wound are carried by automatic conveyors that bring them in succession to the automatic winding machine, cannot have the same stack height, thus, a quick adjustment of the stroke of the hollow shaft is required.

For encompassing in part these problems, in EP0526819 a stator and armature winding machine has been described wherein the drive for the reciprocation and the oscillation has been substituted by two different rotational motors. This machine has been specifically provided for a winding without wire guiding shrouds and with needles eccentric with respect to the axis of the hollow shaft.

The solution disclosed in EP0526819 has the following drawbacks:
- the head which has independent needles for winding without shrouds requires a much more complex mechanism with respect to the traditional structure of the winding machines;
- the use of two rotational motors for effecting the hollow shaft to oscillate and reciprocate needs gear transmission means which have to be reversed at high frequency, causing high inertia that does not allow to achieve satisfactory winding rates;
- the gear transmission means and the like for achieving high precision at the very high frequencies of inversion required in the stator winding machines (i.e. 200-4000 inversions every minute), have to be dimensioned and balanced to prevent vibrations and bending from occurring;
- furthermore, the gear transmission means need frequent maintenance and lubrication and are subject to wear in particular at the high frequencies of inversion;
- for every different geometry of stator a complex manual programming of the stroke of the needles is necessary.

### Summary of the invention

It is, therefore, object of the present invention, to provide a stator winding machine that has a quickly variable stroke actuating apparatus, with an independent drive for the reciprocation and the oscillation and that has not the drawbacks of the prior aft.

It is another object of the present invention to provide such a machine that allows an easy adjustment of the reciprocation and of the oscillation.

A further object of the present invention is to provide a stator winding machine wherein an optimal stroke of the winding means can be quickly programmed.

More generally, it is an object of the present invention to provide an advantageous actuating method for the reciprocation and the oscillation of the hollow shaft of a stator winding machine, which has not the drawbacks of the prior art.

These objects are achieved firstly by this method, in a stator winding machine comprising a hollow shaft with a wire winding end that has at least a wire guiding needle, whose characteristic is that it comprises the steps of:
- direct application to the shaft of a reciprocating motion on the axis of the shaft according to predetermined stroke (z) and frequency;
- contemporaneous direct application of an oscillating motion about the axis of the shaft according to predetermined amplitude (φ) and frequency;
   wherein the reciprocation and the oscillation follow a predetermined function F(z,φ,t).

Advantageously, for every geometry of stator and of possible winding shrouds a step of self-programming of the F function is provided.

Preferably, the direct application of the reciprocating motion is carried out by means of an element integral translationally to the shaft and integral to a linear motor, whereas the direct application of the oscillating motion is carried out by means of a motor unit co-axial to the shaft.

The direct application of the oscillating motion in a first embodiment is carried out by means of a motor unit co-axial to the shaft whose fixed part is integral to the shaft same in longitudinal direction.

The direct application of the oscillating motion in a second embodiment is done by means of a motor unit co-axial to the shaft whose fixed part is integral to the frame of the stator winding machine.

According to another aspect of the invention, a stator winding machine that achieves the above described objects, comprises a hollow shaft that has a wire winding end with at least a wire guiding needle, and has the characteristic that it comprises:
- translating motor means integral translationally to the shaft and reciprocating parallel to the axis of the shaft according to predetermined stroke (z) and frequency;
- rotating motor means rotationally integral to the shaft and oscillating about the axis of the shaft according to predetermined amplitude (φ) and frequency;
- an electronic control unit for transmitting to the translating motor means and to the rotating motor means the reciprocation and oscillation according to a predetermined function F(z,φ,t).

Advantageously, tracing means are provided which can be fixed at the winding end suitable for copying the geometry of the stator and/or the geometry of possible winding shrouds and to determine, in preliminary self-programming step, a geometric function F(z,φ).

Preferably, the translating motor means comprise the armature of a linear motor that extends parallel to the shaft and that is longitudinally integral to the shaft by means of a joint, whereas the rotating motor means comprise the movable part of a rotational motor that is co-axial to the shaft and that is rotationally integral to the shaft.

In a first embodiment of the machine the rotational motor is mounted integrally to the movable part of the linear motor. In particular, the movable part of the linear motor comprises a carriage that is integral translationally to the shaft and translates parallel to its axis, on the carriage an electric motor being mounted with body integral to the carriage and co-axial to the shaft and armature integral and co-axial to the shaft, the armature being hollow axially for allowing the passage of the wire.

In a second embodiment of the machine the rotational motor is mounted integrally to the frame of the machine. In particular, the rotational motor has a body integral to the frame and co-axial to the shaft and has an armature co-axial to the shaft, the armature being hollow axially for allowing the passage of the wire.

### Brief description of the drawings

Further characteristics and the advantages of the device according to the invention will be made clearer with the following description of an embodiment thereof, exemplifying but not limitative, with reference to attached drawings, wherein:
- figure 1 shows a diagrammatical view of a first embodiment of a stator winding machine according to the invention and of the related electronic control unit;
- figures 2, 3 show respectively a longitudinal sectional view and a top plan view of the mechanical part of the machine of figure 1;
- figure 4 shows a perspective view of the carriage of a linear motor used for the machine of figure 1;
- figures 5-8 show the geometry of a stator and of its windings;
- figures 9 and 10 show the motion of the wire winding shaft end of the machine of figure 1;
- figure 11 shows a tracer point for self-programming the geometry of a stator or of wire guiding shrouds;
- figures 12 and 13 show respectively a longitudinal sectional view and an enlarged longitudinal partial sectional view of a different embodiment of the machine of figure 1;
- figures 14 and 15 show respectively a diagram of the electronic control unit and a flow-sheet of the self-programming logic of the machine according to the invention.

### Description of a preferred embodiment

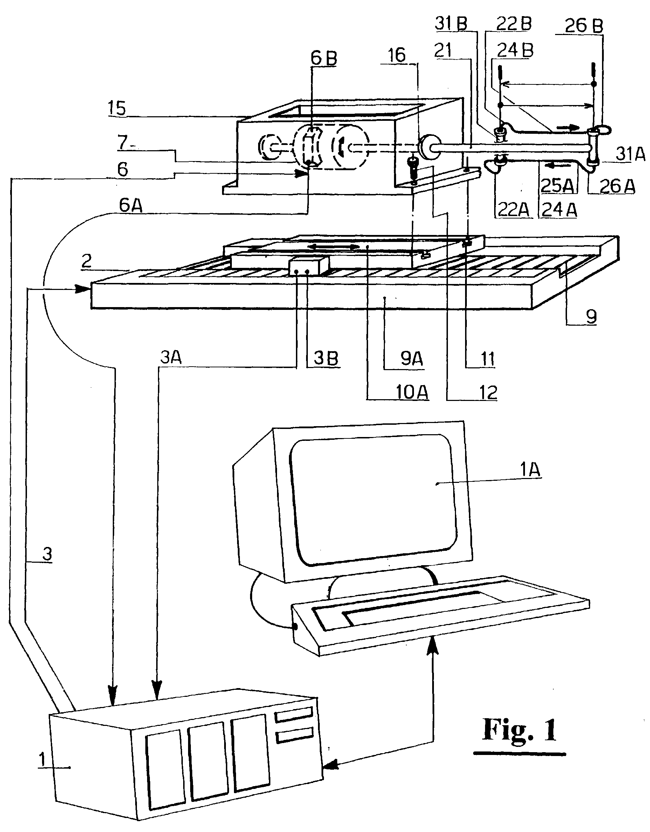

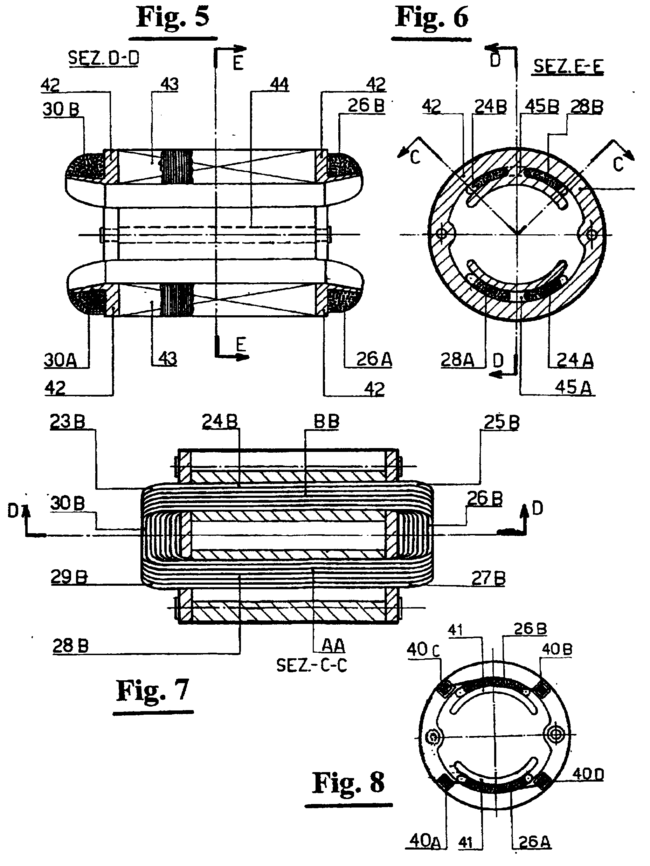

With reference to figure 1, a stator winding machine according to the invention has a winding shaft 21 having, as known from the prior art, an end with two opposite needles 31A, 31B suitable for supplying electric wire to be wound about the poles of a stator (figures 5-8).

According to the invention, the machine is associated to an electronic control unit 1, for adjusting and matching the needles, in which a predetermined function F(z,φ,t), described below, is loaded and selected via keyboard and monitor 1a. This function controls a linear motor 2 and a rotational motor 7 by means respectively of lines 3 and 6 using also the position data of feedback lines 3a and 6a.

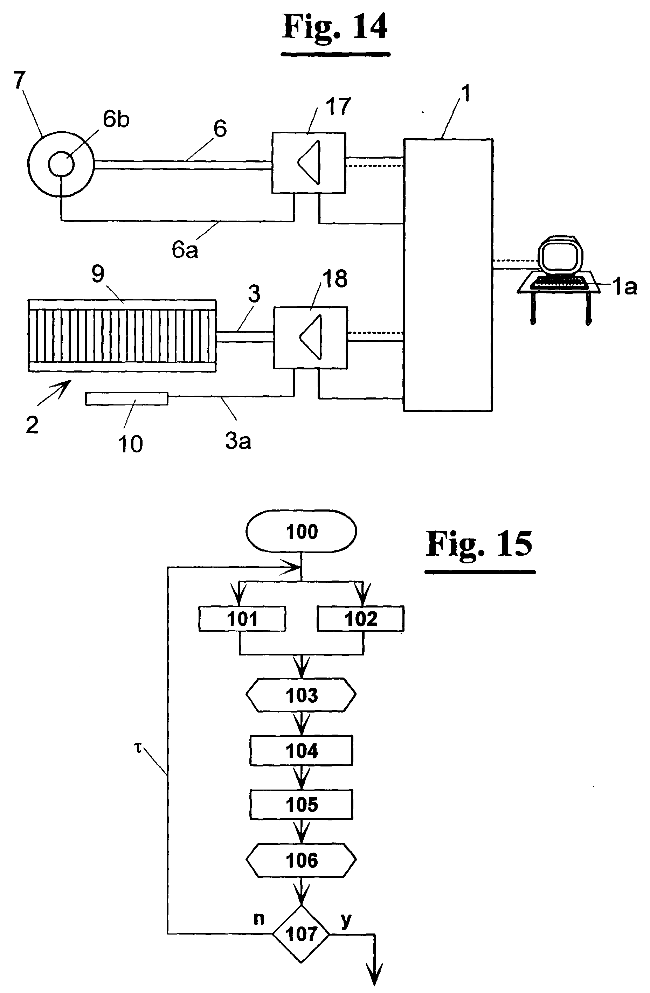

A diagram of the control system is shown in figure 14, wherein electronic unit 1, for example having digital I/O, comprises a numerical control interpolator residing in the memory of a CPU, operating according to the flow sheet of figure 15, described below. Motor 7 and actuator 2 are connected to electronic unit 1 through respective drivers 17 and 18, which exchange feedback signals of the axial and angular position coming from the actuators and send driving signals to the actuators.

With reference again to figures 1-4, winding shaft 21 reciprocates according to a stroke z given by linear motor 2, comprising an armature slider 10 that moves on a stator slideway 9, forward and back. A sensor 3B, for example a linear resolver, reads the position of slider l0 on slideway 9 of linear motor 2 and communicates them through line 3a to electronic unit 1.

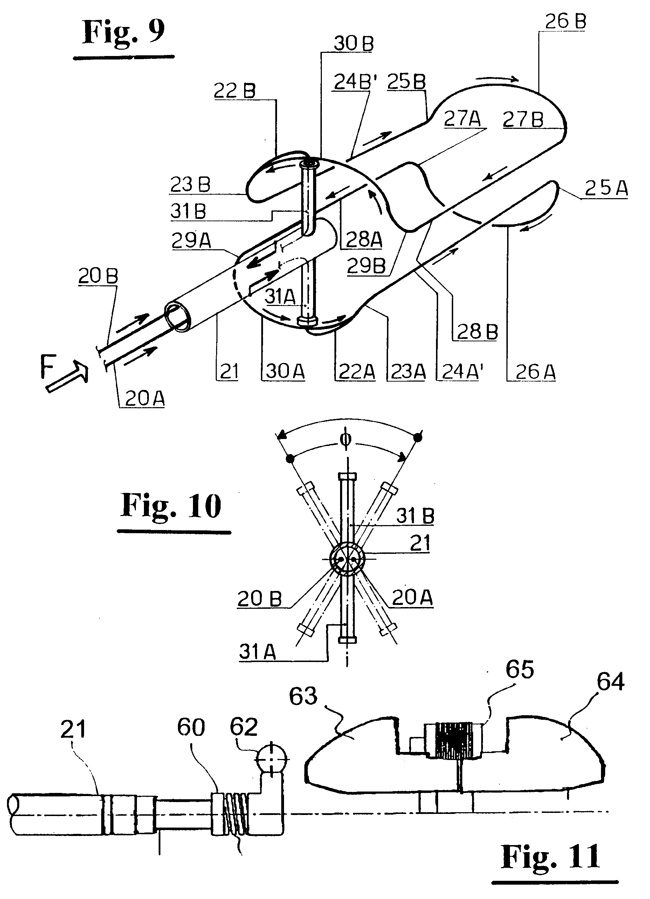

Furthermore winding shaft 21 is rotationally integral to armature 7B of rotational motor 7. Feedback circuit 6A of the angular position φ (see also figures 9 and 10) of rotational motor 7 uses the signals of a sensor 6B, for example an angular resolver, which reads the angular position of armature 7B of rotational motor 7.

Rotational motor 7 is mounted on a support 15 that is integral to slider 10 of linear motor 2. More precisely, motor 7 has stator body 7A integral to support 15 and hollow armature 7B integral to hollow shaft 21. This way, it transmits directly the oscillation to shaft 21 and follows the latter in its reciprocation, executed by support means 15 that has pivot joints 16.

Concerning linear motor 2, with 9A the support is indicated wherein slideway 9 is housed on which slider 10 moves. With 10A the plane is indicated on which support 15 is connected in the tracks 11 by means of screws 12. With 13 the decelerators are indicated of slider 10, which moves on guides 14, whereas with 14A a cable holder is indicated, shown only partially.

Winding shaft 21 is hollow and in it two wires 20A and 20B slide for winding two coils BA and BB (figure 5-8) of the stator. As well known, before starting the winding step wires 20A and 20B are previously fixed to terminals 40A and 40B (figure 8) thus forming the origin of the two windings. With 41 the poles are indicated for making the two windings against shoulders 42, whereas with 43 the sheet stack of the stator is indicated. Pulling connection screws 44 of the stator are provided. As the winding step is completed, the two wires are terminated in housings 40C and 40D and then cut.

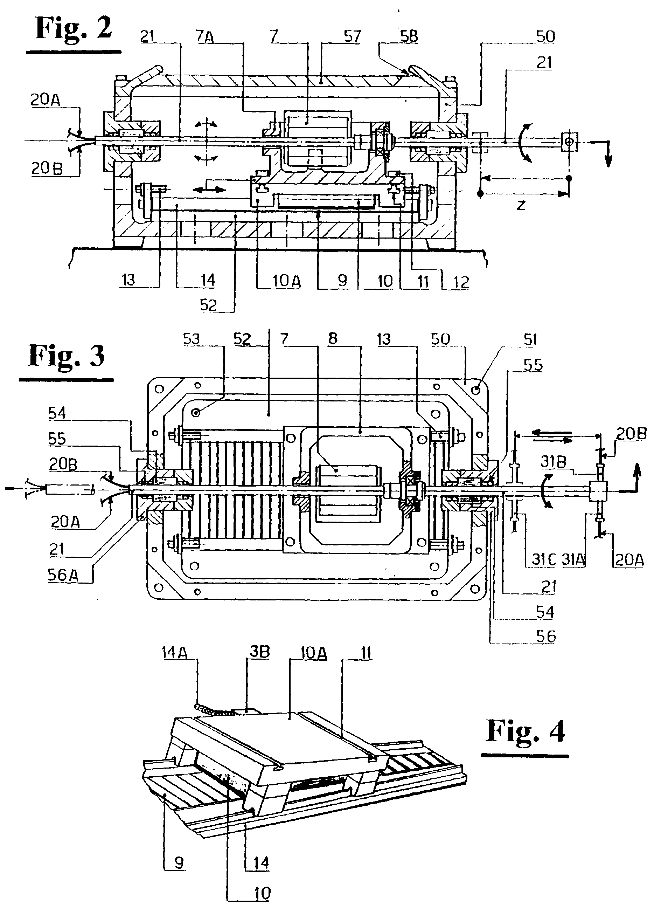

With reference again to figures 1 - 4, end 21A of hollow shaft 21 conveys wires 20A and 20B that come out from needles 31A and 31B. With 22A and 22B the trajectories are indicated of the path of wires 20A and 20B when passing from needles 31A and 31B of shaft 21 to recesses 24A - 24B and 28A - 26B that the wires 20A and 20B must follow for making coils BA and BB. With 23A-30A the trajectories of first coil BA are indicated, whereas with 23B-30B the trajectories of second coil BB are indicated. With 50 (figures 2 and 3) the box containing linear motor 2 is indicated formed by slideway 9 and slider l0, comprising screws 51 connecting its fixed part to the frame of the machine. With 52 the plate is indicated on which guides 14 of slideway 9 are connected. With 53 the screws are indicated that fix plate 52 to box 50. With 54 the sliding bearings are indicated of hollow shaft 21 and with 55 the related seals housed in bushings 56 - 56A are indicated. With 57 the cover of box 50 is indicated having openings 58.

Concerning linear motor 2, in figures from 1 to 4 an exemplifying embodiment thereof has been shown, even if other existing linear motors can be used, such as mobile coil motors. Concerning rotational motor 7, many existing types can be used, for example brushless motors, vectorial motors, etc.

The embodiment of figures 1-4 shows then a direct engagement of motors 2 and 7 on shaft 21, without intermediate gearing that would give relevant inertia at the high inversion frequencies of the movement (minimum 100-200 strokes/minute, but achieving very higher rates). Furthermore, the advantages of motor 7 mounted on the movable part of linear actuator 2 and co-axial to shaft 21 are that the winding machine is compact, it does not require frequent maintenance, it minimises the vibrations and the wear, it does not require lubrication, and it can work safely, for example in parallel with other similar machines.

According to an advantageous embodiment of the invention, with reference to figure 11, by means of a testing device 60 which can be fixed at the end of shaft 21 it is possible to determine the most favourable trajectory of a winding needle defining the function between the linear stroke z and the angle of rotation φ. More precisely the testing device 60 comprises a tracer point with spherical end 61 that can bend by virtue of resilient joint 62. In the presence of wire winding shrouds 63 and 64 applied to a stator 65, head 61 can copy the shapes to follow, guided by the operator in successive steps. In particular, testing device 60, for every angle φ of head 61, detects the distances of the point of contact of the head from an axis of reference, i.e. the axis of shaft 21, detecting every time the co-ordinate z at which the first contact occurs.

Likewise, for stators that can be wound without the use of shrouds, the procedure is similar, even if tracer points of different shape can be used.

This way, it is possible a self-programming of the function F(z,φ) not only for calculating each single stroke, but also for adjusting each stroke with respect to the successive one, following the progressive growth of the windings that are wound. This step can be carried out also in case of stators to be wound without shrouds, with templates that represent the real shape of the stator and of its progressive increase of size owing to the deposition of the coils.

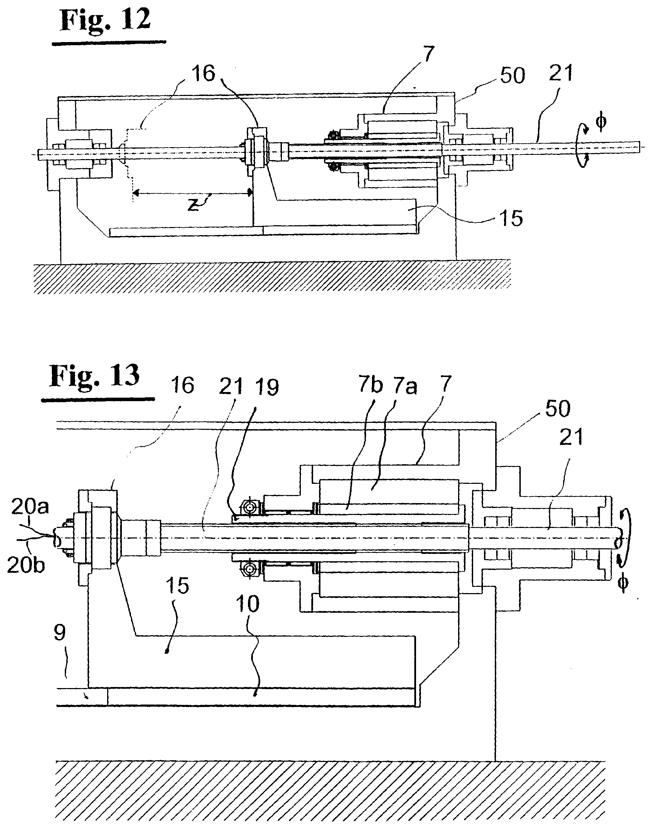

With reference to figures 12 and 13, according to a different embodiment of the invention, motor 7 can be connected as a fixed part to box 50 instead of connection as movable part. This can be, for example, necessary in case of high power of motor 7, which would be too heavy for being supported by linear motor 2. In this case, the movable support 15 has less complex shape and comprises only the joint 16 longitudinally integral to shaft 21. Motor 7 has stator body pole 7a integral to box 50 and armature 7b hollow and integral to a spline sleeve 19 co-axial to shaft 21. This way the oscillation is transmitted even if it allows the longitudinal sliding.

Notwithstanding for oscillation reference has been made to a rotational motor 7, it is not excluded that instead of motor 7 a second linear motor is mounted, having a slider transversal to shaft 21 integral to a rack that meshes directly on shaft 21. Also in this case a direct engagement would occur, without transmissions and gearing.

Furthermore notwithstanding reference has been made to a linear motor 2 for reciprocation, it is not excluded that instead of linear motor 2 a rotational motor is mounted which, indirectly causes a reciprocation of carriage 15. In this case, even if there is the drawback of an indirect transmission, the advantage would occur, according to the invention, that rotational motor 7 can be mounted on the carriage of figures 1-4.

With reference to figure 15, the control logic of check the interpolator present in unit 1, works according to the following steps:
- 100-: starting movement;
- 101-: reading position of slider of the linear motor
- 102-: reading angular position of the armature of the motor for oscillation (contemporaneously to 101)
- 103-: comparing the read position with the theoretical position
- 104-: calculating error of position slider 101
- 105-: calculating error of armature 102 angular position
- 106-: output of errors 104 and 105 and generation of a signal of feedback or control;
- 107-: if error = 0, then *y*, final position reached,
if *n*, returns to 100 (scanning time τ for example 100 µs).

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A method for effecting a reciprocating motion and an oscillating motion in a stator winding machine, which comprises a hollow shaft (21) with a wire winding end having at least a wire guiding needle (31A, 31B),
**characterised in that** it comprises the steps of:
- direct application (2, 15) to said shaft (21) of a reciprocating motion along the axis of said shaft according to predetermined stroke (z) and frequency ;
- contemporaneous direct application (7) to said shaft (21) about the axis of said shaft of an oscillating motion according to predetermined amplitude (φ) and frequency ;
- said reciprocation and oscillation following a predetermined function F(z,φ,t).

2. Method according to claim 1, wherein for every geometry of stator (65) for determining the winding paths of said wire winding end a step is provided of self-programming (60) of a geometric function F(z,f).

3. Method according to claim 1, wherein the direct application of the reciprocating motion is carried out by means of a member (10, 15) integral translationally to said shaft (21) and integral to a, linear motor (2, 9), whereas the direct application of the oscillating motion is carried out by means of a motor unit (7) co-axial to said shaft 21).

4. Method according to claim 3, wherein the direct application of the oscillating motion is done by means of said motor unit (7) co-axial to said shaft whose fixed part (7A) translates integrally to said shaft (21).

5. Method according to claim 3, wherein the direct application of the oscillating motion is done by means of a motor unit (7) co-axial to said shaft (21) whose fixed part (7A) is integral to the frame (50) of the stator winding machine.

6. Programmable apparatus for effecting a reciprocating motion and an oscillating motion in a stator winding machine, said machine comprising a hollow shaft (21) that has a wire winding end with at least a wire guiding needle (31A, 31B), **characterised in that** it comprises:
- translating motor means (10) integral translationally to said shaft (21) and reciprocating parallel to the axis of said shaft (21) according to predetermined stroke (z) and frequency ;
- rotating motor means (7B) rotationally integral to said shaft (21) and equipped with an oscillating motion about the axis of said shaft (21) according to predetermined amplitude (φ) and frequency ;
- an electronic control unit (1) for transmitting to said translating motor means (10) and to said rotating motor means (7B) said reciprocation and oscillation following a predetermined function F(z,φ,t).

7. Programmable apparatus for effecting a reciprocating motion and an oscillating motion in a stator winding machine, said machine comprising a hollow shaft (21) that has a wire winding end having at least a wire guiding needle, **characterised in that** it comprises:
- first motor means (2) having a first stator (9) and a first translating armature (10), said first armature (10) effecting a reciprocating motion parallel to the axis of said shaft (21) according to predetermined stroke (z) and frequency ;
- seconds motor means (7) effecting the oscillation of said shaft (21) according to predetermined amplitude (φ) and frequency, having a second armature (7B) and a second stator (7A), said second stator (7A) being integral to said first armature (10,15) of said first motor means (2);
- an electronic control unit (1) for effecting to said shaft (21) by means of said first motor means (10) and said seconds motor means (7B) the reciprocation and oscillation following a predetermined function F(z,φ,t).

8. Apparatus according to claim 6 or 7, wherein tracer means are provided (60), which can be fixed to said winding end, (21) that, for every different geometry of said stator (65), detect the winding paths of said winding end (31A, 31B) to establish, in a preliminary self-programming step, a geometric function F(z,φ).

9. Apparatus according to claim 6, wherein the translating motor means comprise the armature (10) of a linear motor that extends parallel to said shaft (21) and that is integral (15) to said shaft (21) by means of a joint (16) linked translationally to it but not rotationally, whereas the rotating motor means comprise the armature (7B) of a rotational motor that is co-axial to said shaft (21) and that is rotationally integral to said shaft.

10. Apparatus according to claim 9, wherein said armature (10) of said linear motor is mounted integral translationally to said shaft (21) by means of a carriage (15) that translates parallel to its axis, to said carriage (15) said rotational motor (7) being mounted with its stator body (7A) integral to said carriage (15) and co-axial to said shaft (21) and its armature (7B) rotationally integral to said shaft (21), said armature (7B) being hollow axially for allowing the passage of the wire (20A, 20B).

11. Apparatus according to claim 9, wherein said rotational motor (7) is mounted integrally to the frame (50) of the machine, said rotational motor (7) having a stator body (7A) integral to said frame (50) and co-axial to said shaft (21) and an armature (7B) co-axial and rotationally integral to said shaft (21), said armature (7B) being hollow axially for allowing the passage of the wire (20A, 20B).
